# FASCICULE DE BREVET EUROPEEN

(11) **EP 1 856 926 B1**
(45) Date de publication et mention de la délivrance du brevet: **25.04.2012**
(21) Numéro de dépôt: 06709528.1
(22) Date de dépôt: 20.02.2006
(51) Int. Cl.: H04L 29/06, H04W 88/16

(54) **DISPOSITIF DE CONTROLE D'ACCES DE TERMINAUX D'ABONNES D'UN DOMAINE CS A DES SERVICES D'UN RESEAU DE COMMUNICATION IMS**
EINRICHTUNG ZUR STEUERUNG EINES CS-DOMÄNEN-TEILNEHMER-ENDGERÄTE-ZUGANGS ZU EINEM IMS-KOMMUNIKATIONSNETZWERKDIENSTEN
DEVICE FOR CONTROLLING A CS DOMAIN SUBSCRIBER TERMINAL ACCESS TO AN IMS COMMUNICATION NETWORK SERVICES

(30) Priorité: 23.02.2005 FR 0550492
(43) Date de publication de la demande: 21.11.2007
(73) Titulaire: Alcatel Lucent, 75007 Paris (FR)
(72) Inventeur: THIEBAUT, Laurent, F-92160 Antony (FR); BULTINCK, Alain, F-91310 Longpont sur Orge (FR)
(74) Mandataire: El Manouni, Josiane
(86) Numéro de dépôt international: PCT/FR2006/050149
(87) Numéro de publication internationale: WO 2006/090081

(56) Documents cités:
- US-A1- 2002 110 104
- US-A1- 2003 027 595

## Description

L'invention concerne les réseaux de communication mobiles offrant à la fois une connectivité de type « circuit » (domaine dit circuit ou CS (pour « Circuit Switched »)) et une connectivité Internet (ou IP), et concerne plus précisément le contrôle de l'accès de terminaux d'abonnés du domaine circuit d'un réseau de communication mobile à des services d'un réseau de communication dit IMS (pour « IP Multimédia (core network) Subsystem »).

Comme le sait l'homme de l'art, les opérateurs de certains réseaux de communication offrant une connectivité IP, comme par exemple les réseaux GPRS ou UMTS, ont développé des domaines IMS qui offrent des services spécifiques aux clients qui sont inscrits (ou abonnés) auprès d'eux. Par exemple, grâce au protocole de signalisation SIP (pour « Session Initiation Protocol ») il est possible d'afficher sur l'écran d'un terminal de communication raccordé à un domaine IMS une page Internet personnelle de l'appelant, ou de mettre à disposition des services de communication vocale améliorée ou des services multimédia IP ou encore des services de messagerie instantanée, ou de faire sonner différents terminaux appartenant à un même utilisateur lorsqu'il est appelé.

Le « domaine IMS » repose (au niveau du réseau d'accès) sur un domaine d'accès de type dit paquet ou « PS » (pour « Packet Switched »), par exemple un réseau GPRS, ou un domaine d'un réseau de communication fixe, comme par exemple un réseau ADSL, ou un domaine d'un réseau local sans fil ou WLAN (pour « Wireless Local Area Network »).

Afin de permettre à des clients de domaines CS d'établir des communications avec des clients de domaines IMS, les réseaux de coeur (ou « core network ») des réseaux précités comportent des modules fonctionnels appelés MGCF (« Média Gateway Control Function »), et les passerelles média (ou « media gateway ») associées. Ces derniers sont chargés de convertir des protocoles de signalisation utilisés par les domaines CS, comme par exemple ISUP ou BICC, en protocoles de signalisation IMS, comme par exemple SIP, et réciproquement. Ils assurent donc l'interconnexion entre les réseaux IMS et les réseaux téléphoniques commutés, tels que PSTN, ISDN, et les domaines CS des réseaux mobiles (ou PLMN).

Grâce à ces modules MGCF (et aux passerelles média associées) un téléphone mobile, raccordé à un domaine CS d'un réseau mobile (ou PLMN) peut par exemple établir une communication vocale avec n'importe quel téléphone mobile raccordé à n'importe quel domaine IMS de n'importe quel opérateur. Cependant il ne peut pas profiter des services offerts par ces domaines IMS.

L'invention a donc pour but d'améliorer la situation, et notamment de mettre à la disposition de clients choisis d'un domaine CS des services offerts par des réseaux IMS et/ou d'optimiser et/ou « d'unifier » certaines applications de service, comme par exemple un service unifié (éventuellement de pré-paiement IMS/CS), si possible sans modifier les centres de gestion d'appels (ou MSC (pour « Mobile Service Switching Centre ») et/ou les modules de contrôle de session IMS (ou CSCF pour « Call Session Control Function ») que comportent les réseaux de coeur des domaines IMS.

Le document US2003/0027595, publié le 6 Février 2003, décrit un dispositif pour faciliter à des terminaux cellulaires raccordés sur un mode CS l'accès a des services offerts dans un réseau IMS. Selon ce document le dispositif MSC est remplacé par un nouveau dispositif nommé i-MSC qui agit comme interface entre le réseau cellulaire en mode CS et le réseau IMS. Notamment, le i-MSC implémente les fonctionnalités de conversion des protocoles des signalisation entre CS et IMS pour l'établissement d'appels demander par le terminal cellulaire en mode CS , et les fonctionnalités de SIP User Agent et P-CSCF pour l'enregistrement d'un abonné utilisant le terminal cellulaire sur une entité S-CSCF.

Par contre, l'invention à comme but de proposer une solution où le dispositif ne remplace pas le MSC mais il coopère avec le MSC au moyen d'une implémentation modulaire des fonctions complémentaires. Notamment, permettant de garder des modules standards comme le GMSC entre les modules basiques du MSC et les modules du dispositif ajouté.

Elle propose à cet effet, selon la revendication 1, un dispositif de contrôle d'accès d'un terminal, raccordé à un domaine de type CS d'un réseau de communication mobile (ledit domaine CS comprenant au moins un centre de type MSC chargé de gérer les commutations de communication circuit ou CS), à des services auxquels il est abonné et qui sont assurés par un réseau de communication de type IMS (comprenant au moins un module de type P-CSCF (pour « Proxy-Call Session Control Function ») et au moins un module de type S-CSCF (pour « Serving-Call Session Control Function ») couplé à au moins un serveur d'application (ou AS pour « Application Server ») offrant les services).

Ce dispositif de contrôle d'accès se caractérise par le fait qu'il comprend, couplés au MSC et au réseau IMS :
- un module de type GMSC (pour « Gateway Mobile Switching Centre ») chargé de gérer l'établissement d'une communication vers un terminal raccordé au domaine CS,
- un module de type MGCF chargé de convertir des messages provenant du domaine CS selon un protocole de signalisation CS (par exemple ISUP ou BICC) en messages selon un protocole de signalisation IMS (par exemple SIP) destinés à un module S-CSCF (appartenant au réseau IMS auprès duquel l'abonné qui utilise le terminal a souscrit son abonnement aux services IMS via un terminal CS), et inversement,
- un module de type I-CSCF (pour « Interrogating-Call Session Control Function ») chargé d'initier l'enregistrement des abonnés requerrant le service IMS/CS, raccordés au domaine CS, auprès d'un module S-CSCF (appartenant au réseau IMS auprès duquel le terminal a souscrit son abonnement aux services IMS), et
- un émulateur de module P-CSCF et un agent d'utilisateur chargés, premièrement, de coopérer ensemble au nom du terminal CS pour ordonner au module I-CSCF d'initier l'enregistrement de l'abonné utilisateur du terminal auprès d'un module S-CSCF du réseau IMS fournissant les services auxquels il est abonné, deuxièmement, lorsque le terminal CS tente d'établir un appel via le module MGCF, d'envoyer cet appel au module S-CSCF auprès duquel il est enregistré, et troisièmement en cas de réception d'une demande d'établissement de communication vers le terminal CS, provenant du module S-CSCF (du réseau IMS offrant les services auxquels ce terminal est abonné), d'ordonner au module GMSC, via le module MGCF, de gérer cet établissement du côté du domaine CS.

Dans ce qui suit, on entend systématiquement par « souscrire des services IMS » le fait de souscrire un ou plusieurs services IMS via un terminal circuit ou CS.

Le dispositif selon l'invention peut faire partie intégrante du centre MSC. Mais, lorsque ce n'est pas le cas, il peut également comporter un serveur d'application (ou AS pour « Application Server ») chargé, pour chaque abonné ayant droit au service, de déterminer l'adresse d'un dispositif de contrôle d'accès du réseau mobile auquel appartient cet abonné, puis de fournir au module d'informations de souscription de son propre réseau mobile (par exemple de type HSS (pour « Home Subscriber Server »)) un marquage IMS via un terminal CS associé à l'abonné et des informations complémentaires associées, et (par exemple lorsque le serveur d'application reçoit un message signalant que le terminal CS d'un abonné aux services IMS de son réseau mobile d'appartenance est enregistré auprès d'un centre MSC), d'ordonner au dispositif déterminé de procéder à l'enregistrement de cet utilisateur auprès d'un module S-CSCF du réseau IMS offrant les services auxquels il est abonné. Les informations complémentaires associées au marquage d'abonné IMS (via un terminal CS) sont des données permettant le routage des communications vers le dispositif déterminé. Elles peuvent être éventuellement accompagnées, par exemple, de données destinées à déterminer en fonction de quel(s) critère(s) mettre en oeuvre le routage via le dispositif.

Dans ce qui suit, on entend systématiquement par « marquage IMS » un marquage désignant un abonné à un ou plusieurs services IMS via un terminal circuit ou CS.

L'invention propose également un centre MSC, selon la revendication dépendante 7, équipé d'un dispositif de contrôle d'accès du type de celui présenté ci-avant.

Le centre MSC (à dispositif intégré), selon l'invention, peut comporter d'autres caractéristiques qui peuvent être prises séparément ou en combinaison, et notamment :
- lorsqu'un terminal d'un utilisateur abonné se raccorde au MSC, les moyens de traitement peuvent être chargés, lorsqu'ils reçoivent (éventuellement d'un module d'informations de souscription de l'abonné (HSS-HLR)), un éventuel marquage IMS attestant que l'utilisateur du terminal est abonné à des services IMS, de stocker dans le module VLR (pour « Visitor Location Register »), en correspondance d'informations représentatives de l'abonné, le marquage IMS et les informations complémentaires associées comme l'adresse du dispositif de contrôle d'accès du réseau IMS auquel il appartient ;
   - les moyens de traitement peuvent être chargés d'ordonner au dispositif de contrôle d'accès de leur réseau mobile de procéder à l'enregistrement de l'abonné auprès du réseau IMS lorsque les renseignements comportent un marquage IMS et que ce terminal appartient à leur réseau mobile ;
   - les moyens de traitement peuvent être chargés d'ordonner au dispositif de contrôle d'accès d'un terminal d'abonné, raccordé à un domaine de type CS, à des services IMS d'initier l'enregistrement de l'abonné auprès du réseau IMS offrant les services auxquels il est abonné lorsque les renseignements comportent un marquage IMS et que ce terminal n'appartient pas à leur réseau mobile ;
- en cas de réception d'une demande d'établissement de communication provenant d'un terminal d'abonné raccordé au domaine CS, les moyens de traitement peuvent être chargés de déterminer si l'abonné est associé à un marquage IMS attestant qu'il est abonné aux services IMS d'un réseau IMS, et dans l'affirmative de transmettre la demande au dispositif de contrôle d'accès auquel ils sont couplés afin qu'il traite cette demande en coopération avec le réseau IMS offrant les services auxquels il est abonné ;
   - les moyens de traitement peuvent être chargés d'accéder au module VLR pour déterminer si un abonné appelant raccordé au domaine CS a souscrit à des services IMS via un terminal CS ;
- en présence d'un terminal raccordé au domaine CS de son réseau mobile d'appartenance, le marquage IMS via un terminal CS est par exemple de type OSSS (pour « Operator Specific Supplementary Service » - service supplémentaire spécifique de l'opérateur) ;
- en présence d'un terminal raccordé au domaine CS mais appartenant à un autre réseau mobile, le marquage IMS via un terminal CS est par exemple de type IN/CSI (pour « Intelligent Network / CAMEL Subscription Information »).

L'invention propose également un centre MSC, selon la revendication indépendante 15, couplé à un dispositif de contrôle d'accès comportant un serveur d'application, du type de celui présenté ci-avant.

Ce centre MSC se caractérise par le fait qu'il comprend des moyens de traitement couplés à un dispositif de contrôle d'accès et chargés, lorsqu'ils reçoivent des informations signalant le raccordement d'un terminal au domaine CS de leur réseau mobile, d'accéder à un module d'informations de souscription de leur réseau mobile (comme par exemple le module HSS) pour lui transmettre les informations en vue de sa mise à jour, et pour que le module d'informations de souscription puisse transférer dans le module VLR auquel l'abonné est rattaché un éventuel marquage IMS (attestant que l'utilisateur du terminal est abonné à des services nécessitant la mise en oeuvre du dispositif), afin que ce marquage soit stocké en correspondance d'informations représentatives de l'abonné.

Ce centre MSC peut comporter d'autres caractéristiques qui peuvent être prises séparément ou en combinaison, et notamment :
- lorsqu'ils reçoivent une demande d'établissement de communication provenant d'un terminal raccordé au domaine CS, ses moyens de traitement peuvent être chargés de déterminer si l'abonné utilisant ce terminal est associé à un marquage IMS attestant qu'il est abonné aux services IMS, et dans l'affirmative, si ce marquage est associé à une donnée de type OSSS (« Operator Specific Supplementary Service »), de router la demande d'établissement de communication vers le dispositif de contrôle d'accès en fonction d'informations complémentaires de type OSSS, ou, si ce marquage est associé à une donnée de type IN/CSI (pour « Intelligent Network / CAMEL Subscription Information »), de demander à un point de contrôle de service de type SCP (pour « Service Control Point ») des informations destinées à permettre le routage de la communication demandée vers le dispositif de contrôle d'accès du réseau mobile auquel est abonné le terminal demandeur, puis de router la demande d'établissement de communication vers ce dispositif de contrôle d'accès en fonction des informations de routage ;
   - les moyens de traitement peuvent être chargés d'accéder au module VLR pour déterminer si un appelant dont le terminal est raccordé au domaine CS est abonné à des services IMS.

D'autres caractéristiques et avantages de l'invention apparaîtront à l'examen de la description détaillée ci-après, et des dessins annexés, sur lesquels :
- la figure 1 illustre de façon schématique et fonctionnelle une partie d'un réseau mobile raccordé à un réseau IMS et comportant un premier exemple de réalisation d'un dispositif de contrôle d'accès selon l'invention,
- la figure 2 illustre de façon schématique et fonctionnelle les principaux éléments ou modules de réseau impliqués dans une phase d'enregistrement IMS de terminal, lorsque le dispositif de contrôle d'accès est intégré dans le centre MSC,
- la figure 3 illustre de façon schématique et fonctionnelle les principaux éléments ou modules de réseau impliqués dans une phase d'établissement de communication (ou d'appel) à l'initiative d'un terminal raccordé à un domaine CS,
- la figure 4 illustre de façon schématique et fonctionnelle une partie d'un réseau mobile raccordé à un réseau IMS et comportant un second exemple de réalisation d'un dispositif de contrôle d'accès selon l'invention,
- la figure 5 illustre de façon schématique et fonctionnelle les principaux éléments ou modules de réseau impliqués dans une phase d'enregistrement IMS de terminal, lorsque le dispositif de contrôle d'accès n'est pas intégré dans le centre MSC, et
- la figure 6 illustre de façon schématique et fonctionnelle les principaux éléments ou modules de réseau impliqués dans une phase d'établissement de communication (ou d'appel) vers un terminal raccordé à un domaine CS.

L'invention a notamment pour objet de permettre la mise à disposition de terminaux de clients choisis d'un domaine circuit ou CS (appelés ou appelants) de services offerts par des réseaux IMS auxquels ils sont abonnés et/ou d'optimiser certaines applications de service IMS/CS.

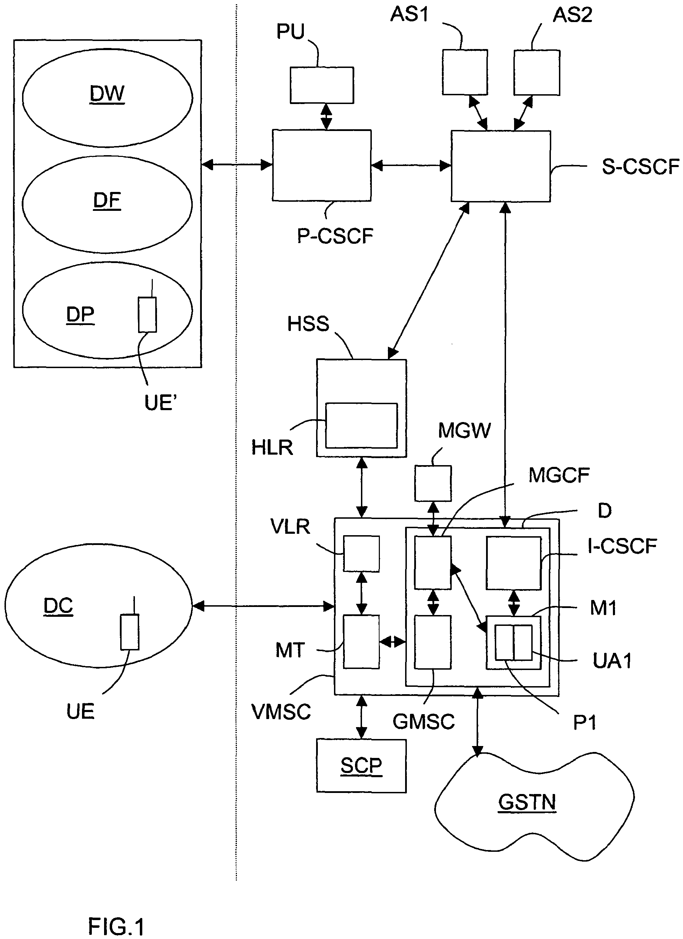

Comme cela est illustré sur la figure 1, certains opérateurs de réseau de communication mobile disposent non seulement d'un réseau mobile, comme par exemple un réseau GPRS/EDGE ou UMTS, offrant une connectivité Internet (ou IP), mais également d'un réseau IMS raccordé à leur réseau mobile via le domaine paquet (ou « PS domain ») de ce dernier. Le réseau de coeur (ou « core network ») est alors constitué d'une sous-partie CS (pour « Circuit Switched ») et d'une sous-partie IMS.

Les constituants d'un réseau mobile et d'un réseau IMS étant bien connus de l'homme de l'art, ils ne seront pas décrits ici en détails, comme c'est notamment le cas dans la spécification RFC 23.002 (pour le réseau IMS) de l'organisme 3GPP, accessible sur le site Internet du 3GPP. Les mêmes mécanismes s'appliquent également à des réseaux à base de technologie d'accès CDMA 2000 et de technologie Core MMD (équivalent à IMS) telles que définies par le 3GGP2.

Il est simplement rappelé ci-après quelques fonctionnalités d'éléments ou modules du réseau de coeur, utiles à la compréhension de l'invention.

Un réseau IMS permet à des clients abonnés de disposer de services IMS spécifiques lorsqu'ils sont raccordés à un domaine paquet (référencé DP) de leur réseau d'appartenance ou d'un réseau visité dans le cas du « roaming ». Pour ce faire, le réseau de coeur IMS comporte tout d'abord un module de contrôle de session IMS ou P-CSCF (pour « Proxy-Call Session Control Function ») qui est le premier point de contact avec le réseau de coeur IMS pour un terminal UE d'un client abonné raccordé à un domaine IMS.

Il est rappelé qu'un domaine IMS peut être raccordé soit à un domaine de type paquet DP (ou PS pour « Packet Switched »), comme par exemple un réseau GPRS, soit à un domaine d'un réseau de communication fixe DF, comme par exemple un réseau ADSL, soit à un domaine d'un réseau local sans fil ou WLAN (pour « Wireless Local Area Network ») DW.

Ce module P-CSCF comprend une fonction CSCF assurant le routage de messages selon le protocole SIP (« Session Initiation Protocol »). Il assure généralement, et notamment, une fonction de sécurité, une fonction de contrôle du plan d'utilisateur (ou « user plane ») PU, une fonction de compression SIP, une fonction de génération d'identifiants de taxation, une fonction d'assertion d'identité de l'abonné, une fonction de correspondance entre l'adresse publique et l'adresse IP de l'abonné, et une fonction de gestion de routage vers et depuis un autre module de contrôle de session appelé S-CSCF.

Le module S-CSCF (pour « Serving-Call Session Control Function ») constitue la porte d'entrée vers les services IMS offerts par le réseau IMS. A cet effet, il est connecté à un ou plusieurs serveurs d'applications (ou AS pour «Application Server ») AS1 et AS2. Il est notamment chargé de l'authentification des abonnés et du stockage de l'adresse du module P-CSCF auquel est raccordé le terminal d'un abonné IMS.

Ce module S-CSCF est couplé à une base de données de souscription appelée HSS (pour « Home Subscriber Server ») afin de récupérer des informations sur les abonnés et d'y stocker les adresses connues desdits abonnés.

Comme on le verra plus loin, le module S-CSCF coopère avec le module HSS et un autre module de contrôle de session appelé I-CSCF (pour « Interrogating-Call Session Control Function ») lors des phases d'enregistrement des terminaux des abonnés sur le domaine IMS.

Dans un environnement traditionnel, le module I-CSCF est notamment chargé de rechercher où se trouvent les abonnés aux services IMS de son réseau IMS. A cet effet, il est non seulement connecté au module HSS de son réseau IMS, mais également aux réseaux de coeur des autres réseaux IMS, et plus précisément à leurs modules S-CSCF.

Le réseau de coeur d'un réseau mobile à domaine CS comprend notamment un centre de gestion d'appels ou MSC (pour « Mobile Service Switching Centre ») chargé de gérer les commutations de communication (ou d'appel) de type circuit ou CS. Ce centre MSC traite notamment les procédures de changement de cellules ou « handovers ». Il est connecté à une base de données de souscription appelée HLR (pour « Home Location Register ») qui fait généralement partie du module HSS, afin de récupérer des informations sur les abonnés et d'y stocker les adresses et positions connues desdits abonnés. Par ailleurs, il comprend une mémoire (ou base de données) appelée VLR (pour « Visitor Location Register ») dans laquelle il stocke les données relatives à chaque abonné dont le terminal UE est connecté au domaine CS (référencé DP sur la figure 1), qu'il gère et qu'il a extraites du module HLR.

Le module MSC est également connecté à un point de contrôle de service de type SCP (pour « Service Control Point ») dans lequel sont stockées des informations / algorithmes destiné(e)s à permettre la fourniture de services spécifiques à des abonnés CS, services pouvant nécessiter le re-routage des communications (ou appels) des terminaux connectés au domaine CS qu'il gère.

Dans un environnement traditionnel, le raccordement entre un module S-CSCF d'un réseau IMS et chaque réseau mobile (à domaine CS), notamment, se fait par l'intermédiaire d'un module appelé MGCF (« Media Gateway Control Function »). Ce dernier est chargé de convertir le protocole de signalisation utilisé par le domaine CS, comme par exemple ISUP ou BICC, en protocole de signalisation IMS utilisé par le réseau IMS, comme par exemple SIP, et inversement. Il assure également l'interconnexion entre un réseau IMS et les réseaux téléphoniques commutés, tels que PSTN et ISDN.

Le module MGCF assure également le contrôle d'une passerelle MGW (pour « Média GateWay ») chargée notamment de l'inter-fonctionnement entre domaine IMS et domaine CS au niveau du plan usager, comme par exemple de traduire la voix en mode paquet en voix en mode circuit (TDM)

Par ailleurs, dans un environnement traditionnel, le réseau de coeur d'un réseau mobile à domaine CS comprend une interface de routage appelée GMSC (pour « Gateway Mobile Switching Centre »), raccordée au module MSC, au module HLR ainsi qu'aux autres réseaux téléphoniques commutés regroupés sous l'acronyme anglais GSTN (pour « Generalized Switch Telephony Networks »), comme par exemple PSTN et ISDN.

Ce module GMSC est notamment chargé d'interroger le module HLR afin de déterminer où se trouve situé le terminal mobile UE d'un abonné.

Il reçoit les demandes d'appels entrants provenant d'un réseau GSTN. Les appels sortants (non IMS) issus d'un domaine CS sont directement transmis au réseau GSTN concerné par le centre MSC.

Afin de permettre à un terminal raccordé à un domaine CS d'un réseau mobile d'utiliser certains aux moins des services qui sont offerts par un réseau IMS auquel il est abonné, l'invention propose un dispositif de contrôle d'accès D couplé au centre MSC du réseau mobile et au module S-CSCF du réseau IMS associé.

Ce dispositif de contrôle d'accès D est chargé de jouer à la fois le rôle d'agent d'utilisateur (ou « User Agent ») pour un terminal UE raccordé à un domaine CS et abonné à des services IMS et de module proxy de type P-CSCF vis-à-vis du module S-CSCF du réseau IMS auquel est abonné ledit terminal UE.

A cet effet, et comme cela est illustré sur la figure 1, le dispositif de contrôle d'accès D comporte un module GMSC, un module MGCF, un module de type I-CSCF, et un module intermédiaire M1 comprenant un émulateur de module P-CSCF P1 et un agent d'utilisateur UA1.

Les modules GMSC, MGCF et I-CSCF sont identiques sur le plan fonctionnel aux modules traditionnels présentés ci-avant. Par conséquent :
- le module GMSC est chargé de gérer l'établissement de communications vers des terminaux UE raccordés au domaine CS du réseau mobile,
- le module MGCF est chargé de convertir un message, provenant d'un terminal UE raccordé au domaine CS du réseau mobile, selon un protocole de signalisation CS (par exemple ISUP) en message selon un protocole de signalisation IMS (par exemple SIP), destiné au module S-CSCF qui appartient au réseau IMS auprès duquel ce terminal UE a souscrit son abonnement à des services IMS, et inversement, et
- le module I-CSCF est chargé d'initier l'enregistrement d'un terminal UE, qui est raccordé au domaine CS, auprès du module S-CSCF qui appartient au réseau IMS auprès duquel il a souscrit son abonnement aux services IMS.

L'émulateur de module P-CSCF P1 ne remplit qu'une partie des fonctions d'un module P-CSCF traditionnel, et notamment la fonction de génération d'identifiants de taxation, la fonction d'assertion d'identité de l'abonné, et la fonction de gestion de routage vers et depuis le module S-CSCF qui appartient au réseau IMS auprès duquel le terminal UE concerné a souscrit son abonnement à des services IMS.

L'agent d'utilisateur UA1 est sensiblement identique aux agents d'utilisateurs qui sont implantés dans les terminaux connectés au domaine IMS, et notamment à ceux connectés au domaine paquet DP (ou PS).

Cet émulateur de module P-CSCF P1 et l'agent d'utilisateur UA1 associé coopèrent ensemble :
- soit au nom d'un terminal UE qui est raccordé à un domaine CS, afin d'ordonner au module I-CSCF de leur dispositif D d'initier l'enregistrement dudit terminal UE auprès d'un module S-CSCF du réseau IMS auprès duquel l'abonné qui utilise ce terminal a souscrit son abonnement à des services IMS,
- soit afin d'ordonner au module GMSC de leur dispositif D, via le module MGCF associé, de gérer l'établissement d'une communication vers un terminal UE, raccordé à un domaine CS, lorsqu'ils reçoivent une demande d'établissement de communication provenant du module S-CSCF (du réseau IMS) auprès duquel le terminal UE a été enregistré,
- soit encore au nom d'un terminal UE qui est raccordé à un domaine CS, sur sollicitation du module MGCF, lorsque ce terminal UE appelle, afin de transmettre l'appel au module S-CSCF (du réseau IMS) auprès duquel le terminal UE a été enregistré.

Le dispositif D selon l'invention peut, comme illustré sur la figure 1, faire partie intégrante du centre MSC. Ce mode de réalisation est particulièrement bien adapté aux opérateurs qui déploient des réseaux mobiles à domaine CS comportant de nouveaux centres MSC, comprenant par exemple des serveurs adaptés au protocole de signalisation SIP et de type NGN (pour « New Génération Network » - nouvelle génération de réseau).

Dans ce cas, le MSC comprend un module de traitement MT couplé au module VLR et au dispositif de contrôle d'accès D.

Ce module de traitement MT est chargé d'intervenir, d'une part, lors de la phase d'enregistrement d'un terminal UE, raccordé au domaine CS, auprès du réseau IMS auquel il est abonné, et d'autre part, lors de l'établissement d'une communication avec un terminal UE, raccordé au domaine CS.

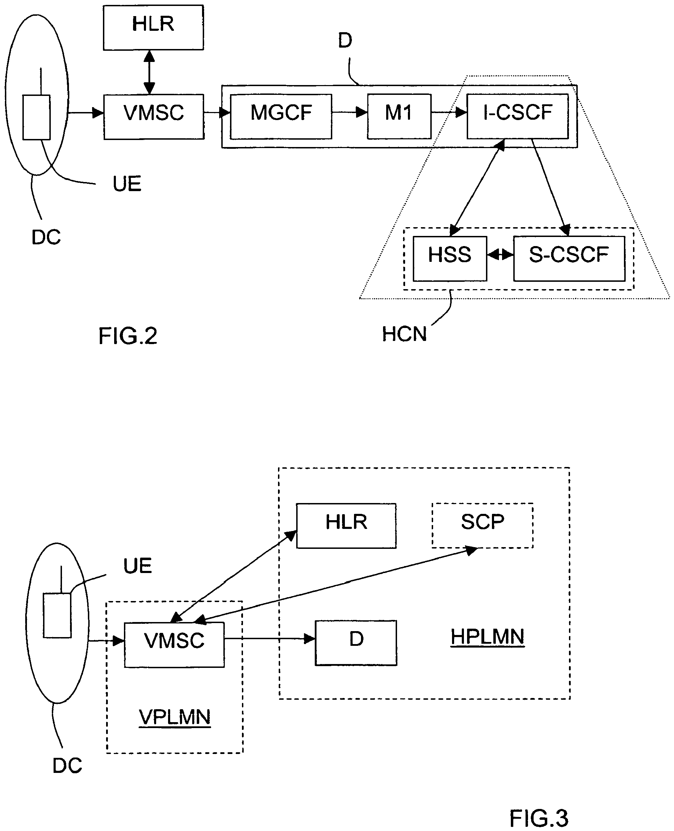

On se réfère maintenant à la figure 2 pour décrire le fonctionnement du dispositif D et du module de traitement MT lors d'une phase d'enregistrement.

Lorsqu'un terminal UE se raccorde au domaine CS d'un réseau mobile ou qu'un terminal UE change de position au sein du domaine CS d'un réseau mobile, le module MSC en est averti.

Il est important de noter que le terminal UE peut être soit raccordé au domaine CS de son réseau mobile d'appartenance, soit raccordé au domaine CS d'un réseau mobile qu'il visite (« roaming »). Dans ce qui suit on appelle centre MSC visité « VMSC » (pour « Visited MSC ») un centre MSC sur lequel un terminal mobile est raccordé, que ce centre MSC appartienne à un réseau mobile d'appartenance (ou « home) ou visité (ou « visited »). Comme on le verra plus loin, ce qu'il est important de différencier c'est, d'une part, un réseau de coeur IMS raccordé à un réseau mobile visité CS auquel un terminal UE n'est pas abonné et, d'autre part, un réseau de coeur IMS raccordé à un réseau mobile visité CS auquel un terminal UE est abonné. Par conséquent dans ce qui suit on appellera « réseau de coeur IMS d'appartenance HCN » un réseau de coeur IMS correspondant au réseau mobile d'appartenance d'un terminal UE. Un réseau mobile peut être à la fois un réseau visité et un réseau d'appartenance.

Une fois qu'un centre visité VMSC a traité l'attachement d'un terminal UE, son module de traitement MT accède au module HLR du réseau d'appartenance de l'abonné utilisant le terminal de manière à mettre à jour les informations qu'il stocke et à récupérer, notamment, les éventuelles informations de souscription (marquage IMS) signalant que ledit abonné à souscrit à l'accès aux services IMS via un terminal circuit (ou terminal CS).

Puis, son module de traitement MT stocke dans le module VLR de son centre visité VMSC, en correspondance des informations représentatives d'un abonné, le marquage IMS associé à cet abonné, reçu du module HLR, et des données complémentaires associées comme l'adresse du dispositif de contrôle d'accès D du réseau IMS d'appartenance de l'abonné (HCN).

Trois situations peuvent alors se présenter : soit l'abonné qui utilise le terminal UE n'est pas associé à un marquage IMS, soit l'abonné qui utilise le terminal UE est associé à un marquage IMS et le réseau mobile CS visité est le réseau mobile d'appartenance du terminal UE, soit encore l'abonné qui utilise le terminal UE est associé à un marquage IMS et le réseau mobile CS visité n'est pas le réseau mobile d'appartenance du terminal UE.

Dans la première situation, il n'y a pas d'enregistrement IMS à effectuer, si bien que la phase d'enregistrement se termine.

Dans la deuxième situation, le module de traitement MT ordonne au dispositif de contrôle d'accès D de son centre visité VMSC de procéder à l'enregistrement IMS de l'abonné qui utilise le terminal UE auprès du réseau IMS d'appartenance HCN. Le module de traitement MT transmet alors au module intermédiaire M1 (constitué de P1 et UA1) une demande d'enregistrement et les informations permettant d'accéder au réseau de coeur IMS d'appartenance HCN, et plus précisément à un module S-CSCF, via le module I-CSCF.

Le module M1 génère alors une demande d'enregistrement (appelée REGISTER) au nom du terminal UE concerné qu'il transmet ensuite au module I-CSCF de son dispositif D, qui se charge d'initier l'enregistrement IMS du terminal UE concerné auprès d'un module S-CSCF (du réseau de coeur HCN) que ce module I-CSCF aura choisi. Cet enregistrement IMS s'effectue conformément à la procédure classique déclenchée par la demande REGISTER, comme si le module intermédiaire M1 était un module P-CSCF traditionnel. Il implique donc classiquement non seulement le module I-CSCF du dispositif D, implanté dans le centre visité VMSC, et un module S-CSCF du HCN local, mais également le module HSS du HCN local.

Dans la troisième situation (l'abonné qui utilise le terminal UE est associé à un marquage IMS et le réseau mobile CS visité n'est pas le réseau mobile d'appartenance du terminal UE), un module « Application Server » (serveur d'application) situé dans le réseau d'appartenance (« home »), lorsqu'il reçoit un message signalant que le terminal CS d'un abonné aux services IMS de son réseau mobile d'appartenance est enregistré auprès d'un centre MSC, ordonne au dispositif externe D qu'il a choisi de procéder à l'enregistrement du terminal auprès d'un module S-CSCF du réseau IMS. Le module intermédiaire M1 du dispositif externe D génère alors une demande d'enregistrement REGISTER au nom du terminal UE concerné qu'il transmet ensuite au module I-CSCF du même dispositif D, qui doit alors se connecter au réseau IMS d'appartenance distant pour initier l'enregistrement IMS du terminal UE concerné auprès d'un module S-CSCF. Cet enregistrement IMS s'effectue également conformément à la procédure classique déclenchée par la demande REGISTER, comme si le module intermédiaire M1 était un module P-CSCF traditionnel. Il implique donc classiquement non seulement le module I-CSCF du dispositif D, mais également un module S-CSCF, et le module HSS du HCN distant.

Lorsque le terminal UE est raccordé au domaine CS de son réseau mobile d'appartenance et qu'il est abonné à des services du réseau IMS associé, son marquage IMS est par exemple une marque de service supplémentaire spécifique PLMN de type OSSS (pour « Operator Specific Supplementary Service »). Cette marque OSSS permet aussi, comme on le verra plus loin, de re-router un appel de façon forcée vers un noeud qui est le dispositif de contrôle d'accès D local.

Lorsque le terminal UE est raccordé au domaine CS d'un réseau mobile visité qui est différent de son réseau d'appartenance et qu'il est abonné à des services du réseau IMS de ce réseau mobile d'appartenance, son marquage IMS est par exemple de type IN/CSI (pour « Intelligent Network / CAMEL Subscription Information »). Ce marquage IN/CSI permet, comme on le verra plus loin, de re-router un appel de façon forcée vers un noeud distant qui est le dispositif de contrôle d'accès D distant implanté dans le réseau mobile d'appartenance distant.

Le type du marquage IMS (interne - « OSSS » - ou « IN/CSI ») envoyé par le module HLR au centre VMSC, est choisi par le HLR (par exemple en fonction du fait que le réseau mobile CS visité est ou n'est pas le réseau mobile d'appartenance du terminal).

On se réfère maintenant à la figure 3 pour décrire le fonctionnement du dispositif D et du module de traitement MT lors d'une phase d'établissement de communication à l'initiative d'un terminal UE raccordé à un domaine CS.

Lorsqu'un terminal UE, raccordé au domaine CS d'un réseau mobile, souhaite établir une communication, il avertit le centre visité VMSC qui gère ce domaine CS.

Le centre visité VMSC prévient son module de traitement MT afin qu'il détermine si le terminal UE concerné est associé à un marquage IMS attestant qu'il est abonné aux services IMS via un terminal circuit ou CS. Pour ce faire, le module de traitement MT accède au module VLR qui est implanté dans son centre VMSC afin d'analyser les données qui y sont stockées en correspondance de l'identifiant du terminal UE.

Comme dans le cas de l'enregistrement, trois situations différentes peuvent alors survenir : soit le terminal UE n'est pas associé à un marquage IMS, soit le terminal UE est associé à un marquage IMS et le réseau mobile visité est le réseau mobile d'appartenance du terminal UE, soit encore le terminal UE est associé à un marquage IMS et le réseau mobile visité n'est pas le réseau mobile d'appartenance du terminal UE.

Dans la première situation, le terminal UE ne peut pas bénéficier des services IMS d'un réseau IMS. Par conséquent, le centre VMSC route l'appel du terminal UE vers l'un des réseaux GSTN.

Dans la deuxième situation, le module de traitement MT ordonne au dispositif de contrôle d'accès D de son centre visité VMSC de router l'appel vers le réseau IMS local, et plus précisément vers son coeur de réseau IMS qui est ici le coeur de réseau IMS d'appartenance HCN. Le module de traitement MT transmet alors la demande d'établissement d'appel via le module MGCF (afin qu'il convertisse cette demande selon le protocole ISUP en une demande selon le protocole SIP) au module intermédiaire M1 (constitué de P1 et UA1)).

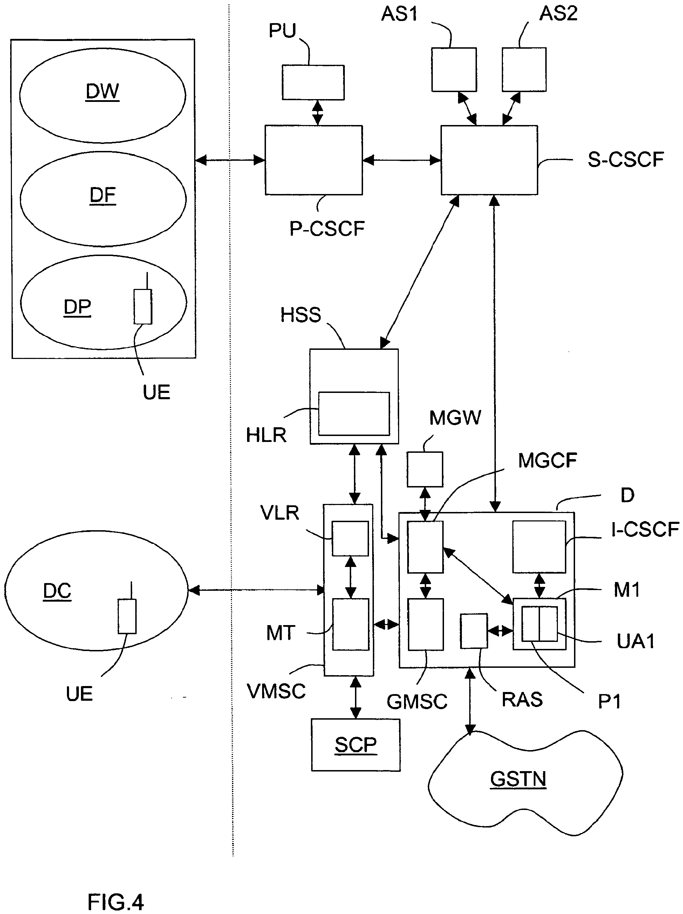

Le module M1 route alors cette demande d'établissement d'appel vers le module S-CSCF (du réseau de coeur HCN) auprès duquel est enregistré le terminal UE demandeur. Le module S-CSCF se charge ensuite de traiter la demande d'établissement comme une communication IMS normale, ceci incluant l'appel à des serveurs applicatifs (« AS »), comme par exemple AS1 et AS2 illustrés sur les figures 1 et 4, qui rendent les services IMS auxquels l'abonné a souscrit.

Dans la troisième situation, le module de traitement MT, conformément aux marques IMS des données d'abonné stockées dans le module VLR, demande à un point de contrôle de service de type SCP (pour « Service Control Point ») des instructions pour le routage de la communication. Puis, lorsqu'il reçoit la réponse du SCP, il route la demande d'établissement de communication vers le dispositif D de contrôle d'accès du réseau mobile auquel est abonné le terminal demandeur. Le module MGCF de ce dispositif D convertit cette demande selon le protocole ISUP en une demande selon le protocole SIP et la transmet au module intermédiaire M1 (constitué de P1 et UA1).

Le module M1 route alors cette demande d'établissement d'appel vers le module S-CSCF distant (du réseau de coeur HCN distant) auprès duquel est enregistré l'abonné demandeur. Le module S-CSCF se charge ensuite de traiter la demande d'établissement comme une communication IMS normale, ceci incluant l'appel à des serveurs applicatifs (« AS »), comme par exemple ceux référencés AS1 et AS2 sur les figures 1 et 4, qui rendent les services IMS auxquels l'abonné a souscrit.

Dans ce qui précède, on a décrit le cas d'un dispositif de contrôle d'accès D intégré dans un centre MSC. Mais, comme illustré sur la figure 4, le dispositif de contrôle d'accès D peut également ne pas faire partie du centre MSC de son réseau mobile, tout en y étant connecté ainsi qu'au module S-CSCF du réseau IMS associé.

Dans ce cas, il est avantageux que le dispositif de contrôle d'accès D comporte également un serveur d'application (ou AS pour « Application Server ») RAS.

Ce serveur d'application RAS est principalement dédié à la phase d'enregistrement IMS des terminaux UE qui sont raccordés au domaine CS de son réseau mobile.

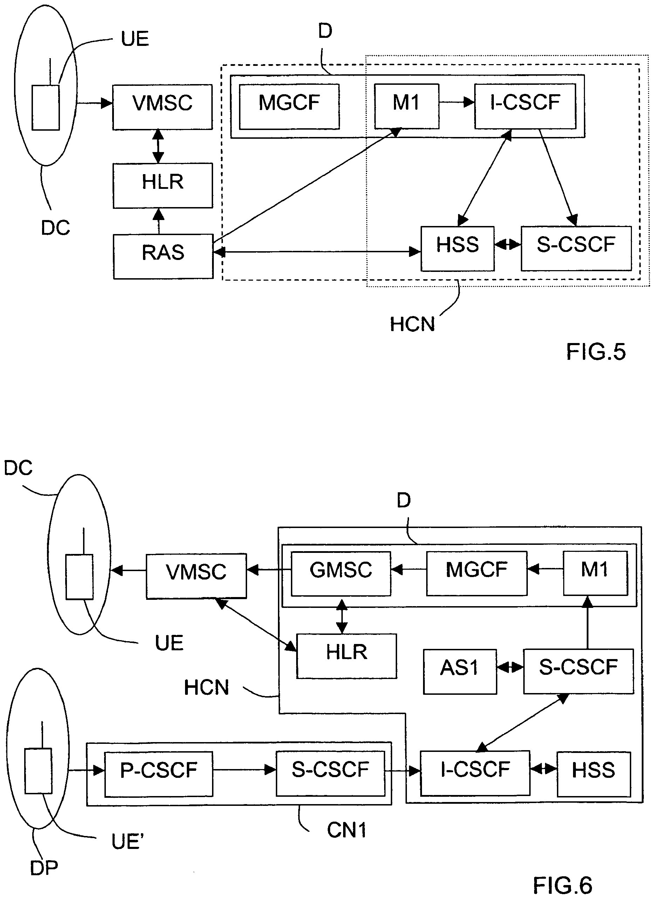

On se réfère maintenant à la figure 5 pour décrire le fonctionnement du dispositif D (lorsqu'il n'est pas intégré dans le centre MSC), et du module de traitement MT de ce centre MSC lors d'une phase d'enregistrement impliquant un serveur d'application RAS.

Le serveur d'application RAS est chargé de déterminer, pour un abonné qui a souscrit au service d'accès à l'IMS via un terminal CS et dont le terminal est connecté au domaine circuit CS, l'adresse du dispositif de contrôle d'accès D au sein de ce réseau mobile. Bien entendu, le serveur d'application RAS peut faire partie d'un dispositif de contrôle d'accès D qui est implanté dans le réseau mobile auquel appartient le terminal.

Puis, le serveur d'application RAS fournit au module HLR de son propre réseau mobile (local) un marquage IMS associé au terminal et des informations complémentaires comme par exemple des informations destinées à permettre le routage de la communication vers le dispositif de contrôle d'accès D qu'il a déterminé (et qui est éventuellement distant et donc différent de celui dans lequel il est implanté).

Enfin, il contrôle le dispositif de contrôle d'accès D qu'il a déterminé pour procéder à l'enregistrement de l'abonné auprès d'un module S-CSCF du réseau IMS qui offre les services auxquels il est abonné et qui est raccordé au réseau mobile auquel il appartient.

Plus précisément, le serveur d'application RAS ordonne au module intermédiaire M1 (constitué de P1 et UA1), du dispositif de contrôle d'accès D qu'il a déterminé, d'enregistrer l'abonné concerné auprès d'un module S-CSCF du réseau de coeur IMS HCN auquel il est localement connecté.

Le module M1 génère alors une demande d'enregistrement REGISTER au nom du terminal concerné qu'il transmet ensuite au module I-CSCF de son dispositif de contrôle d'accès D, qui se charge d'initier l'enregistrement IMS du terminal concerné auprès d'un module S-CSCF du réseau de coeur IMS HCN. Cet enregistrement IMS s'effectue conformément à la procédure classique déclenchée par la demande REGISTER, comme si le module M1 était un module P-CSCF traditionnel. Il implique donc classiquement non seulement le module I-CSCF du dispositif D (déterminé par le serveur d'application RAS), mais également un module S-CSCF, et le module HSS HCN.

Lorsque le terminal UE est raccordé au domaine CS de son réseau mobile d'appartenance et que l'utilisateur de ce terminal est abonné à des services du réseau IMS via un terminal CS, son marquage IMS est par exemple une marque de service supplémentaire spécifique PLMN de type OSSS (pour « Operator Specific Supplementary Service »).

Lorsque le terminal UE est raccordé au domaine CS d'un réseau mobile visité qui est différent de son réseau d'appartenance et que l'utilisateur de ce terminal est abonné à des services du réseau IMS (via un terminal CS) de ce réseau mobile d'appartenance, son marquage IMS est par exemple de type IN/CSI (pour « Intelligent Network / CAMEL Subscription Information »).

On se réfère de nouveau à la figure 3 pour décrire le fonctionnement du module de traitement MT d'un centre VMSC et du dispositif D (séparé dudit centre VMSC) lors d'une phase d'établissement de communication à l'initiative d'un terminal UE raccordé à un domaine CS.

Lorsqu'un terminal UE, raccordé au domaine CS d'un réseau mobile, souhaite établir une communication, il avertit le centre visité VMSC qui gère ce domaine CS.

Le centre visité VMSC prévient son module de traitement MT afin qu'il détermine si l'utilisateur du terminal UE concerné est associé à un marquage IMS attestant qu'il est abonné aux services IMS d'un réseau IMS. Pour ce faire, le module de traitement MT accède au module VLR qui est implanté dans son centre VMSC afin d'analyser les données qui sont stockées en correspondance des coordonnées de l'utilisateur du terminal UE, et notamment déterminer si un marquage IMS est stocké en correspondance des coordonnées de cet utilisateur.

Deux situations différentes peuvent alors survenir : soit l'utilisateur n'est pas associé à un marquage IMS, soit l'utilisateur est associé à un marquage IMS.

Dans la première situation, le terminal UE ne peut pas bénéficier des services IMS d'un réseau IMS. Par conséquent, le VMSC route l'appel du terminal UE vers l'un des réseaux GSTN, par exemple le réseau mobile visité VPLMN.

Dans la deuxième situation, le module de traitement MT accède au point de contrôle de service SCP (« Service Control Point ») dans lequel sont stockées les informations et les algorithmes destinés à permettre le routage des communications (ou appels) des abonnés qui ont souscrit à des services requérant la mise en oeuvre de ce SCP.

Puis, le module de traitement MT route la demande d'établissement de communication vers le dispositif de contrôle d'accès D dont l'adresse a été communiquée par le point de contrôle de service SCP. Comme indiqué précédemment, ce dispositif de contrôle d'accès D peut être soit celui auquel son centre visité VMSC est connecté localement, soit un dispositif de contrôle d'accès D appartenant au réseau mobile distant auquel est abonné l'utilisateur du terminal UE demandeur. Le routage peut par exemple se faire en ajoutant un préfixe au champ appelé « partie appelée » (ou « called party »).

Dans un cas comme dans l'autre, le dispositif de contrôle d'accès D, vers lequel est routé l'appel, transmet la demande d'établissement d'appel à son module MGCF afin qu'il convertisse cette demande selon le protocole ISUP en une demande selon le protocole SIP. Puis, le module MGCF transmet la demande convertie au module intermédiaire M1 (constitué de P1 et UA1) de son dispositif de contrôle d'accès D, lequel la transmet au module S-CSCF du réseau de coeur IMS d'appartenance HCN, auprès duquel est enregistré l'abonné demandeur. Le module S-CSCF se charge ensuite de traiter la demande d'établissement comme une communication IMS normale, ceci incluant l'appel à des serveurs applicatifs (« AS »), comme par exemple ceux référencés AS1 et AS2 sur les figures 1 et 4, qui rendent les services IMS auxquels l'abonné a souscrit.

On se réfère maintenant à la figure 6 pour décrire le fonctionnement du dispositif D et du module de traitement MT lors d'une phase d'établissement de communication vers un terminal UE raccordé à un domaine CS.

Lorsqu'un terminal UE' raccordé à un domaine IMS veut établir une communication avec un terminal UE raccordé à un domaine CS d'un réseau mobile, il transmet la demande d'établissement d'appel au module P-CSCF auquel il est rattaché, lequel la transmet au module S-CSCF de son réseau de coeur IMS CN1. Le module S-CSCF du réseau IMS CN1 la transmet ensuite à un module I-CSCF du réseau HCN auquel l'utilisateur du terminal appelé UE est abonné. Ce module I-CSCF détermine alors, grâce au module HSS, les informations relatives à l'adresse du module S-CSCF auprès duquel l'abonné appelé est enregistré. Il est rappelé que ces informations sont censées avoir été stockées lors d'une phase d'enregistrement antérieure.

Puis, le module I-CSCF transmet la demande d'établissement d'appel au module S-CSCF auprès duquel l'abonné appelé est enregistré. Ce module S-CSCF, après avoir fait appel au(x) serveur(s) d'applications (par exemple AS1) supportant les services à fournir à l'appelé, transmet ensuite cette demande d'établissement d'appel au dispositif de contrôle d'accès D (qui joue, vu de ce module S-CSCF, exactement le rôle d'un module P-CSCF).

Cette demande d'établissement d'appel est ensuite reçue par le module intermédiaire M1 du dispositif de contrôle d'accès D qui la transmet au module MGCF dudit dispositif D afin qu'il la convertisse du protocole SIP vers le protocole ISUP, compréhensible par le module GMSC de ce même dispositif D, lequel est chargé de gérer l'établissement des communications vers les terminaux qui sont raccordés au domaine CS qu'il gère.

Une fois qu'il est en possession de la demande d'établissement d'appel, le module GMSC accède au module HLR du réseau mobile auquel est abonné l'utilisateur du terminal UE appelé. Puis, il contacte le centre visité VMSC qui gère les commutations d'appel du domaine CS auquel est raccordé le terminal UE appelé afin que la communication soit établie.

Le dispositif de contrôle d'accès D selon l'invention, et notamment son module MGCF, son module GMSC, son module intermédiaire M1, son module I-CSCF et son éventuel serveur d'application RAS, et/ou le module de traitement MT du centre de commutation d'appels (V)MSC, peuvent être réalisés sous la forme de circuits électroniques, de modules logiciels (ou informatiques), ou d'une combinaison de circuits et de logiciels.

L'invention ne se limite pas aux modes de réalisation de dispositif de contrôle d'accès et de centre de commutation d'appels décrits ci-avant, seulement à titre d'exemple, mais elle englobe toutes les variantes que pourra envisager l'homme de l'art dans le cadre des revendications ci-après.

Ainsi, dans ce qui précède on a décrit un exemple de mise en oeuvre de l'invention dans lequel l'accès d'un abonné à des services IMS, dont le terminal est raccordé à un domaine circuit (CS), est systématique. Mais cela n'est pas obligatoire. On peut en effet envisager que le marquage IMS (ou des données complémentaires) spécifie(nt) des conditions (ou critères) qui permettent la fourniture des services IMS à un abonné.

Par exemple, cette possibilité de fournir des services IMS à des abonnés peut n'être offerte que par certains opérateurs. Cette possibilité de fournir des services IMS peut également n'être offerte qu'à certains abonnés (ayant souscrit à ce type de service).

Par ailleurs, pour un abonné ayant souscrit à ce type de service, la possibilité d'envoyer un appel émis par son terminal CS vers les services IMS peut ne pas être systématiquement mise en oeuvre lorsque cet appel est émis par ledit terminal CS. Les marquages IMS via un terminal CS (OSSS ou IN/CSI) peuvent, par exemple, contenir un ou plusieurs critères permettant de décider quand un appel peut être re-routé ou non vers le réseau IMS.

En outre, le module intermédiaire (référencé M1 ci-avant) peut être configuré avec des données permettant de choisir les informations qui sont mises dans le message d'enregistrement IMS (par exemple de type REGISTER), et donc de contrôler quand et/ou avec quelle priorité un appel IMS reçu doit être envoyé vers un terminal CS d'un abonné appelé.

Les mécanismes décrits ci-avant peuvent également permettre aux abonnés d'un opérateur qui fournit la possibilité de service IMS/CS mais qui sont en visite (ou « roaming ») chez un autre opérateur (« visité ») de bénéficier de cette possibilité et ce indépendamment du support de cette possibilité par l'opérateur visité.

## Revendications

1. Dispositif (D) de contrôle d'accès d'un terminal (UE), le terminal étant raccordé à un domaine de type Circuit Switched, CS, d'un réseau de communication mobile comprenant au moins un centre de type Mobile Service Switching Centre, MSC, (VMSC) chargé de gérer les communications CS, à des services, auxquels son utilisateur est abonné, d'un réseau de communication de type IP Multimedia Subsystem, IMS, comprenant au moins un module de type Proxy Call Session Control Function, P-CSCF, et au moins un module de type Serving Call Session Control Function, S-CSCF, couplé à au moins un serveur d'application (AS1) offrant lesdits services, où le dispositif comprend, IMS, pouvant être couplés audit centre MSC (VMSC) ou intégrés dans ledit centre MSC (VMSC) et pouvant être couplés audit réseau
i) un module de type Gateway Mobile Switching Centre, GMSC, agence pour gérer l'établissement d'une communication vers un terminal (UE) raccordé audit domaine CS,
ii) un module de type Media Gateway Control Function, MGCF, agencé pour convertir des messages provenant du domaine CS selon un protocole de signalisation CS en messages selon un protocole de signalisation IMs destinés à un module S-CSCF et
iii) un module de type Interrogating Call Session Control Function, I-CSCF, agencé pour initier des enregistrements de terminaux, raccordés audit domaine CS, auprès d'un module S-CSCF, et
iv) un émulateur (P1) de module P-CSCF et un agent d'utilisateur (UA1) propres, d'une première part, à coopérer ensemble au nom dudit terminal (UE) pour ordonner audit module I-CSCF d'initier l'enregistrement de l'abonné utilisant ledit termilal (UE) auprès d'un module S-CSCF du réseau IMS fournissant les services auxquels il est abonné, d'une deuxième part, lorsque ledit abonné tente via ledit terminal (UE) d'établir un appel, à router la demande d'établissement d'appel, reçue via le module MGCF, vers le module S-CSCF auprès duquel l'abonné est enregistré, et d'une troisième part, en cas de réception d'une demande d'établissement de communication vers ledit terminal, provenant du module S-CSCF du réseau IMS offrant les services auxquels l'utilisateur dudit terminal (UE) est abonné, à ordonner audit module GMSC, via ledit module MGCF, de gérer cet établissement du côté du domaine CS.

2. Dispositif selon la revendication 1, **caractérisé en ce que** ledit émulateur (P1) de module P-CSCF et ledit agent d'utiitsateur (UA1) sont propres à coopérer ensemble au nom dudit terminal (UE) à la demande dudit centre MSC (VMSC).

3. Dispositif selon la revendication 1, **caractérisé en ce qu'**il comprend, dans le cas où le dispositif n'est pas intégré dans le centre de type MSC un serveur d'application (RAS) agencé, lorsqu'il reçoit un message signalant qu'un abonné doit bénéficier dé service(s) IMS via un terminal CS, pour déterminer l'adresse d'un dispositif (D) du réseau mobile d'appartenance de l'abonné, puis pour fournir au module d'informations de souscription (HSS) de son propre réseau mobile un marquage IMS associé audit abonné et des informations destinées à permettre le routage de communication vers ledit dispositif (D) déterminé, et pour ordonner à ce dispositif déterminé de procéder à l'enregistrement, ou à la terminaison de l'enregistrement, dudit abonne auprès d'un module S-CSCF du réseau IMS offrant les services auxquels l'abonné a souscrit.

4. Dispositif selon la revendication 3, **caractérisé en ce que** ledit émulateur (P1) de module P-CSCF et ledit agent d'utilisateur (UA1) sont propres à coopérer ensemble au nom dudit terminal (UE) à la demande dudit serveur d'application (RAS).

5. Dispositif selon l'une des revendications 3 et 4, **caractérisé en ce que** ledit serveur d'application (RAS) est agencé pour ordonner audit dispositif déterminé de procéder à l'énregistrement, ou à la terminaison de l'enregistrement, dudit abonné auprès d'un module S-CSCF du réseau IMS offrant les services auxquels l'abonné a souscrit, en fonction d'une condition choisie.

6. Dispositif selon la revendication 5, **caractérisé en ce que** ladite condition choisie est un l'enregistrement, ou le désenregistrement, de l'abonné sur un centre MSC du domaine CS d'un autre réseau que son réseau de rattachement.

7. Centre de type MSC (VMSC), destiné à gérer les communications de type CS dans un réseau de communication mobile comportant au moins un domaine de type CS et pouvant être raccordé à un réseau de communication de type IMS comprenant un module de type P-CSCF et un module de type S-CSCF couplé à au moins un serveur d'application (AS1) offrant des services de type IMS **caractérisé en ce qu'**il comprend un dispositif de contrôle d'accès (D) selon l'une des revendications 1 et 2.

8. Centre selon la revendication 7, **caractérisé en ce qu'**il comprend des moyens de traitement (MT) agencés, lorsqu'ils reçoivent des informations signalant le raccordement d'un terminal d'abonné (UE), pour accéder à un module d'informations de souscription (HSS) de leur réseau mobile de manière à lui transmettre lesdites informations pour qu'il se mette à jour puis qu'il transfère dans un module VLR auquel ledit abonné est rattaché un éventuel marquage IMS, signalant que l'utilisateur du terminal est abonné à des services IMS via un terminal CS, afin que ledit marquage IMS via un terminal CS et lesdites informations complémentaires soient stockées en correspondance d'informations représentatives dudit abonné.

9. Centre selon la revendication 8, **caractérise en ce que** lesdits moyens de traitement (MT) sont agencés pour ordonner audit dispositif de contrôle d'accès (D) de leur réseau mobile de procéder à l'enregistrement de l'abonné auprès du réseau IMS lorsque lesdites informations comportent un marquage IMS et que l'abonné appartient à leur réseau mobile.

10. Centre selon l'une des revendications 8 et 9, **caractérisé en ce que**, lorsque lesdites informations comportent un marquage IMS et que l'abonné n'appartient pas au réseau mobile dudit dispositif de contrôle d'accès (D), ce dernier (D) initie l'enregistrement dudit abonné auprès du réseau IMS offrant les services auxquels il est abonné, à réception d'un ordre provenant du réseau d'appartenance dudit abonné.

11. Centre selon l'une des revendications 8 à 10, **caractérisé en ce qu'**en cas de réception d'une demande d'établissement de communication provenant d'un terminal (UE) raccordé audit domaine CS, lesdits moyens de traitement (MT) sont agencés pour déterminer si l'utilisateur dudit terminal (UE) est associé à un marquage IMS attestant qu'il est abonné aux services IMS d'un réseau IMS, et dans l'affirmative pour transmettre ladite demande audit dispositif de contrôle d'accès (D) auquel ils sont couplés afin qu'il traite ladite demande en coopération avec ledit réseau IMS offrant les services auxquels il est abonné.

12. Centre selon la revendication 11, **caractérisé en ce que** lesdits moyens de traitement (MT) sont agencés pour accéder audit module VLR pour déterminer si un appelant dont le terminal (UE) est raccordé audit domaine CS est abonné à des services IMS.

13. Centre selon l'une des revendications 7 à 12, **caractérisé en ce qu'**en présence d'un abonné dont le terminal (UE) est raccordé au domaine CS du réseau mobile auquel il appartient, chaque marquage IMS est de type OSSS.

14. Centre selon l'une des revendications 7 à 13, **caractérisé en ce qu'**en présence d'un abonné dont le terminal (UE) est raccordé audit domaine CS mais appartenant à un autre réseau mobile, chaque marquage IMS est de type) IN/CSI.

15. Centre de type Mobile Service Switching Centre, MSC, (VMSC), destiné à gérer les communications de type Circuit Switched, CS, dans un réseau de communication mobile comportant un domaine de type CS et pouvant être raccordé à un réseau de communication de type IP Multimedia Subsystem, IMS, comprenant au moins un module de type Proxy Call Session Control Function, P-CSCF, et au moins un module de type Serving Call Session Control Function, S-CSCF, couplé à au moins un serveur d'application (AS1) offrant des services de type IMS, et le réseau mobile comprenant aussi un dispositif de contrôle d'accés (D) selon l'une des revendications 1 à 6, où le centre de type MSC comprend des moyens de traitement (MT) pouvant être couplés audit dispositif de contrôle d'accès (P) et agencés, en cas de réception d'informations signalant le raccordement d'un terminal (UE) audit domaine CS de leur réseau mobile, pour accéder à un module d'informations de souscription (HSS) de leur réseau mobile pour lui transmettre lesdites informations en vue de sa mise à jour et lui demander des renseignements sur l'abonné utilisant ledit terminal (UE), et notamment un éventuel marquage IMS attestant qu'il est abonné à des services IMS d'un réseau de communication de type IMS, et pour stocker dans un module de type Visitor Location Register, VLR, de son réseau mobile le marquage IMS associé audit abonné et des informations complémentaires représentatives de l'adresse du dispositif de contrôle d'accès (D) du réseau IMS auquel il appartient, transmis par ledit module d'informations de souscription (HSS), en correspondance d'informations représentatives dudit abonné.

16. Centre selon la revendication 15, **caractérisé en ce qu'**en cas de réception d'une demande d'établissement de communication provenant d'un terminal (UE) raccordé audit domaine CS, lesdits moyens de traitement (MT) sont agencés pour déterminer si l'utilisateur dudit terminal (UE) est associé à un marquage IMS attestant qu'il est abonné aux services IMS, et dans l'affirmative pour demander à un point de contrôle de service de type SCP des informations destinées à permettre le routage de la communication demandée, puis pour router ladite demande d'établissement de communication vers un dispositif de contrôle d'accès (D) du réseau mobile auquel est abonné l'utilisateur dudit terminal demandeur (UE) en fonction desdites informations de routage.

17. Centre selon la revendication 16, **caractérisé en ce que** lesdits moyens de traitement (MT) sont agencés pour accéder audit module VLR pour déterminer si un terminal appelant (UE) raccordé audit domaine CS correspond à un abonné à des services IMS via un terminal CS,

18. Centre selon l'une des revendications 15 à 17, **caractérisé en ce qu'**en présence d'un terminal (UE) raccordé au domaine CS du réseau mobile auquel il appartient, chaque marquage IMS est de type OSSS.

19. Centre selon l'une des revendications 15 à 17, **caractérisé en ce qu'**en présence d'un terminal (UE) raccordé audit domaine CS mais appartenant à un autre réseau mobile, chaque marquage IMS est de type IN/CSI.

## Claims

1. Device (D) for controlling access of a terminal (UE), the terminal being connected to a Circuit Switched domain, CS, of a mobile communication network comprising at least one Mobile Service Switching Centre, MSC, (MSC) tasked with managing CS communications, to services which its user is subscribed to, of an IP Multimedia Subsystem communication network, IMS, comprising at least one Proxy Call Session Control Function module, S-CSCF, coupled to at least one application server (AS1) offering said services, which device comprises the following, which may be coupled to said MSC centre (VMSC) or incorporated into said MSC centre (VMSC) and which may be coupled to said IMS network.
i) a Gateway Mobile Switching Centre module, GMSC, adapted to manage the setting up of a call to a terminal (UE) connected to said CS domain,
ii) a Media Gateway Control Function module, MGCF, adapted to convert messages coming from the CS domain according to a CS signalling protocol into messages according to an IMS signalling protocol intended for a S-CSCF module, and
iii) an Interrogating Call Session Control Function module, I-CSCF, adapted to initiate registrations of terminals connected to said CS domain, with a S-CSCF module, and
iv) a P-CSCF module emulator (P1) and a user agent (UA1) capable firstly of cooperating together on behalf or said terminal (UE) to order said I-CSCF module to initiate the registration of the subscriber using said terminal (UE) with a S-CSCF module of the IMS network providing the services to which he or she is subscribed, and secondly, whenever said subscriber attempts to set up a call via said terminal (UE), of routing the call set-up request received via the MGCF module to the S-CSCF module with which the subscriber is registered, and thirdly, if a request to set up communication to said terminal is received coming from the S-CSCF module of the IMS network offering the services to which the user of said terminal (UE) is subscribed, of ordering said module GMSC, via said module MGCF, to manage that setting-up on the CS domain end.

2. A device according to claim 1, **characterized in that** said P-CSCF module emulator (P1) and said user agent (UA1) are capable of cooperating together on behalf of said terminal (UE) upon the request of said MSC centre (VMSC).

3. A device according to claim 1, **characterized in that** it comprises, in the event that the device is not incorporated into the MSC centre, an application server (RAS) adapted, whenever it receives a message reporting that a subscriber must benefit from IMS service(s) via a CS terminal, to determine the address of a device (D) of the mobile network to which the subscriber belongs, then to provide its own mobile network's subscription information module (HSS) with an IMS marker associated with said subscriber and information intended to enable the routing of communication to said determined device (D), and to order that determined device to proceed to register, or stop registering, said subscriber with an S-CSCF module of the IMS network offering the services to which the subscriber has subscribed.

4. A device according to claim 3, **characterized in that** said P-CSCF module emulator (P1) and said user agent (UA1) are capable of cooperating together on behalf of said terminal (UE) upon the request of said application server (RAS).

5. A device according to one of the claims 3 and 4, **characterized in that** said application server (RAS) is adapted to order said determined device to proceed to register, or stop registering, said subscriber with an S-CSCF module of the IMS network offering the services to which the subscriber has subscribed, as a function of a chosen condition.

6. A device according to claim 5, **characterized in that** said chosen condition is registering, or unregistering, the subscriber with/from an MSC centre of the CS domain of a network besides its own.

7. An MSC centre (VMSC) intended to manage CS communications in a mobile communication network comprising at least one CS domain, which can be connected to an IMS communication network comprising a P-CSCF module and a S-CSCF module combined with at least one application server (AS1) offering IMS services, **characterized in that** it comprises an access control device (D) according to one of the claims 1 and 2.

8. A centre according to claim 7, **characterized in that** it comprises processing means (MT) adapted, whenever they receive information reporting the connection of a subscriber terminal (UE), to access a subscription information module (HSS) of their mobile network in order to transmit said information to it so that it can update itself and then transfer any possible IMS marker to a VLR module to which said subscriber is assigned, reporting that the terminal's user is subscribed to IMS services via a CS terminal so that said IMS marker via a CS terminal and said complementary information is stored as a match for information representative of said subscriber.

9. A centre according to claim 8, **characterized in that** said processing means (MT) are adapted to order said access control device (D) of their mobile network to proceed with registering the subscriber with the IMS network when said information comprise an IMS marker and the subscriber belongs to their mobile Network.

10. A centre according to one of the claims 8 and 9, **characterized in that**, when said information comprise an IMS marker and the subscriber does not belong to the mobile network of said access control device (D), that device (D) initiates the registration of said subscriber with the IMS network offering the services to which he or she is subscribed, upon the receipt of an order from the network to which said subscriber belongs.

11. A centre according to one of the claims 8 to 10, **characterized in that** when a communication set-up request is received from a terminal (UE) connected to said CS domain, said processing means (MT) are adapted to determine whether the user of said terminal (UE) is associated with an IMS marker that states that he or she is a subscriber to the IMS services of an IMS network, and if so to transmit said request to said access control device (D) to which they are coupled, so that it can process said request in cooperation with said IMS network offering the services to which he or she is subscribed.

12. A centre according to claim 11, **characterized in that** said processing means (MT) are adapted to access said VLR module to determine whether a caller whose terminal (UE) is connected to said CS domain subscribes to IMS services.

13. A centre according to one of the claims 7 to 12, **characterized in that** in the presence of a subscriber whose terminal (UE) is connected to the CS domain of the mobile network to which it belongs, each IMS marker is of OSSS type.

14. A centre according to one of the claims 7 to 13, **characterized in that** in the presence of a subscriber whose terminal (UE) is connected to said CS domain but belongs to a different mobile network, each IMS marker is of IN/CSI type.

15. A Mobile Service Switching Centre, MSC, (VMSC), intended to manage Circuit Switched CS communications in a mobile communication network comprising at least one CS domain, and which can be connected to an IP Multimedia Subsystem communication network, IMS, comprising at least one Proxy Call Session Control Function P-CSCF module and at least one Serving Call Session Control Function module S-CSCF, combined with at least one application server (AS1) offering IMS services, and the mobile network also comprises an access control device (D) according to one of the claims 1 to 6, in which the MSC centre comprises processing means (MT) which may be coupled to said access control device (D) and adapted, if information is received reporting the connection of a terminal (UE) to said CS domain of their mobile Network, to access a subscription information module (HSS) of their mobile network to transmit to it said information in order to update itself and request from it information about the subscriber using said terminal (UE), and particularly an IMS marker if any stating that he or she subscribes to IMS services of an IMS communication network, and to store in a Visitor Location Register modules, VLR, of its mobile network the IMS marker associated with said subscriber and complementary information representative of the address of the access control device (D) of the IMS network to which it belongs, transmitted by said subscription information module (HSS), as a match for information representative of said subscriber.

16. A centre according to claim 15, **characterized in that** if a communication set-up request is received from a terminal (UE) connected to said CS domain, said processing means (MT) are adapted to determine whether the user of said terminal (UE) is associated with an IMS marker that states that he or she is a subscriber to the IMS, services of an IMS network, and if so to request, from an SCP service control point, information intended to allow the routing of the requested communication, then to route said communication set-up request to an access control device (D) of the mobile network to which the user of said requesting terminal (UE) is subscribed, as a function of said routing information.

17. A centre according to claims 16, **characterized in that** said processing means (MT) are adapted to access said VLR module to determine whether a calling terminal (UE) connected to said CS domain corresponds to a subscriber of IMS services via a CS terminal.

18. A centre according to one of the claims 15 to 17, **characterized in that** in the presence of a terminal (UE) connected to the CS domain of the mobile network to which it belongs, each IMS marker is of OSSS type.

19. A centre according to one of the claims 15 to 17, **characterized in that** in the presence of a terminal (UE) connected to said CS domain but belongs to a different mobile network, each IMS marker is of IN/CSI type.

## Patentansprüche

1. Vorrichtung (D) zur Kontrolle des Zugangs eines Endgeräts (UE), wobei das Endgerät an eine Domain vom Typ leitungsvermittelte Domain, CS, eines Mobilkommunikationsnetzwerks angeschlossen ist, welches mindestens eine Vermittlungsstelle vom Typ Mobilfunk-Vermittlungsstelle, MSC, (VMSC) umfasst, die für die Verwaltung von CS-Kommunikationen zuständig ist, zu Diensten, die sein Benutzer abonniert hat, eines Kommunikationsnetzwerks vom Typ IP Multimedia Subsystem, IMS, umfassend mindestens ein Modul vom Typ Proxy Call Session Control Function, P-CSCF, und mindestens ein Modul vom Typ Serving Call Session Control Funtion, S-CSCF, welches an mindestens einen Anwendungsserver (AS1), der die besagten Dienste anbietet, gekoppelt ist, wobei die Vorrichtung die folgenden Komponenten, die an die besagte MSC-Vermittlungsstelle (VMSC) gekoppelt oder in die besagte MSC-Vermittlungsstelle (VMSC) integriert und an das besagte IMS-Netzwerk gekoppelt werden können, umfasst:
i) ein Modul vom Typ Gateway-Mobilfunk-Vermittlungsstelle, GMSC, ausgelegt für die Verwaltung des Aufbaus einer Verbindung zu einem an die besagte CS-Domain angeschlossen den Endgerät (UE),
ii) ein Modul vom Typ Medien-Gateway-Steuerfunktion, MGCF, ausgelegt für die Konvertierung von von der CS-Domain eingehenden Nachrichten gemäß einem für ein S-CSCF-Modul bestimmten IMS-Signalisierungsprotokoll, und
iii) ein Modul vom Typ Interrogating Call Session Control Function, I-CSCF, ausgelegt für das Einleiten der Anmeldung von an die besagte CS-Domain angeschlossenen Endgeräten bei einem S-CSCF-Modul, und
iv) einen P-CSCF-Modul-Emulator (P1) und einen Benutzeragenten (UA1), welche dazu geeignet sind, erstens, im Namen des besagten Endgeräts (UE) zusammenzuwirken, um dem besagten I-CSCF-Modul zu befehlen, die Anmeldung des Teilnehmers, welcher das besagte Endgerät (UE) benutzt, bei einem S-CSCF-Modul des IMS-Netzwerks, welches die von ihm abonnierten Dienste anbietet, einzuleiten, zweitens, wenn der besagte Teilnehmer versucht, einen Anruf über das besagte Eindgerät (UE) aufzubauen, die über das MGCF-Modul empfangene Anrufaufbauanforderung an das S-CSCF-Modul, bei welchem der Teilnehmer angemeldet ist, zu routen, und drittens, im Fall des Empfangs einer Verbindungsaufbauanforderung zu dem besagten Endgerät von dem S-CSCF des IMS-Netzwerks, welches die vom Benutzer des besagten Endgeräts (UE) abonnierten Dienste anbietet, dem besagten GMSC-Modul über das besagte MGCF-Modul zu befehlen, diesen Aufbau seitens der CS-Domain zu verwalten.

2. Vorrichtung nach Anspruch 1, **dadurch gekennzeichnet, dass** der besagte P-CSCF-Modul-Emulator (P1) und der besagte Benutzeragent (UA1) dazu geeignet sind, auf Anfrage der besagten Vermittlungsstelle MSC (VMSC) im Namen des besagten Endgeräts (UE) zusammenzuwirken.

3. Vorrichtung nach Anspruch 1, **dadurch gekennzeichnet, dass** sie, wenn die Vorrichtung nicht in der Vermittlungsstelle vom Typ MSC integriert ist, einen Anwendungsserver (RAS) umfasst, welcher dazu ausgelegt ist, bei Empfang einer Nachricht, die signalisiert, dass ein Teilnehmer einen IMS-Dienst über ein CS-Endgerät erhalten soll, die Adresse einer Vorrichtung (D) des Mobilfunknetzwerks, welchem der Teilnehmer angehört, zu ermitteln, anschließend dem Subskriptionsinformations-Modul (HSS) seines eigenen Mobilfunknetzwerks eine mit dem besagten Teilnehmer assoziierte IMS-Markierung sowie Informationen für das Weiterleiten der Kommunikation an die besagte ermittelte Vorrichtung (D) bereitzustellen, und dieser ermittelten Vorrichtung zu befehlen, die Anmeldung des besagten Teilnehmers bei einem S-CSCF-Modul des IMS-Netzwerks, welches die vom Teilnehmer abonnierten Dienste anbietet, vorzunehmen oder zu beenden.

4. Vorrichtung nach Anspruch 3, **dadurch gekennzeichnet, dass** der besagte P-CSCF-Modul-Emulator (P1) und der besagte Benutzeragent (UA1) dazu geeignet sind, auf Anfrage des besagten Anwendungsservers (RAS) im Namen des besagten Endgeräts (UE) zusammenzuwirken,

5. Vorrichtung nach einem der Ansprüche 3 und 4, **dadurch gekennzeichnet, dass** der besagte Anwendungsserver (RAS) dazu ausgelegt ist, der besagten ermittelten Vorrichtung zu befehlen, die Anmeldung des besagten Teilnehmers bei einem S-CSCF-Modul des IMS-Netzwerks, welches die vom Teilnehmer abonnierten Dienste anbietet, je nach einer gewählten Bedingung vorzunehmen oder zu beenden.

6. Vorrichtung nach Anspruch 5, **dadurch gekennzeichnet, dass** die besagte gewählte Bedingung die Anmeldung, oder die Abmeldung, des Teilnehmers auf einer MSC-Vermittlungsstelle der CS-Domain eines anderen Netzwerks als sein Zugehörigkeitsnetzwerk ist.

7. Vermittlungsstelle vom Typ MSC (VMSC), bestimmt für die Verwaltung der Verbindungen vom Typ CS in einem Mobilfunkkommunikationsnetzwerk, welches mindestens eine Domain vom Typ CS umfasst und an ein Kommunikationsnetzwerk vom Typ IMS, welches ein Modul vom Typ P-CSCF und ein an mindestens einen Anwendungsserver (AS1), welcher Dienste vom Typ IMS anbietet, gekoppeltes Modul vom Typ S-CSCF umfasst, angeschlossen werden kann, **dadurch gekennzeichnet, dass** sie eine Zugangskontrollvorrichtung (D) gemäß einem der Ansprüche 1 und 2 umfasst.

8. Vermittlungsstelle nach Anspruch 7, **dadurch gekennzeichnet, dass** sie Verarbeitungsmittel (MT) umfasst, welche dazu ausgelegt sind, bei Empfang von Informationen, die den Anschluss an ein Teilnehmerendgerät (UE) signalisieren, auf ein Subskriptionsinformations-Modul (HSS) ihres Mobilfunknetzwerks zuzugreifen, um diesem die besagten Informationen zu übermitteln, so dass es eine Aktualisierung vornehmen kann und anschließend eine eventuelle IMS-Markierung, welche signalisiert, dass der Benutzer des Endgeräts IMS-Dienste über ein CS-Endgerät abonniert hat, in ein VLR-Modul, an welches der besagte Teilnehmer angebunden ist, transferiert, so dass die besagte IMS-Markierung über ein CS-Endgerät und die besagten zusätzlichen Informationen entsprechend den für den besagten Teilnehmer repräsentativen Informationen gespeichert werden.

9. Vermittlungsstelle nach Anspruch 8, **dadurch gekennzeichnet, dass** die besagten Verarbeitungsmittel (MT) dazu ausgelegt sind, der besagten Zugangskontrollvorrichtung (D) ihres Mobilfunknetzwerks zu befehlen, die Anmeldung des Teilnehmers bei dem IMS-Netzwerk vorzunehmen, wenn die besagten Informationen eine IMS-Markierung enthalten und der Teilnehmer ihrem Mobilfunknetzwerk angehört.

10. Vermittlungsstelle nach einem der Ansprüche 8 und 9, **dadurch gekennzeichnet, dass**, wenn die besagten Informationen eine IMS-Markierung enthalten und der Teilnehmer nicht dem Mobilfunknetzwerk der besagten Zugangskontrollvorrichtung (D) angehört, diese (D) die Anmeldung des besagten Teilnehmers bei dem IMS-Netzwerk, welches die von ihm abonnierten Dienste anbietet, bei Empfang eines Befehls von dem Zugehörigkeitsnetzwerk des besagten Teilnehmers einleitet.

11. Vermittlungsstelle nach einem der Ansprüche 8 bis 10, **dadurch gekennzeichnet, dass**, im Fall des Empfangs einer Verbindungsaufbauanforderung von einem an die besagte CS-Domain angeschlossenen Endgerät (UE), die besagten Verarbeitungsmittel (MT) dazu ausgelegt sind, zu ermitteln, ob der Benutzer des besagten Endgeräts (UE) mit der IMS-Markierung, welche bestätigt, dass er die IMS-Dienste eines IMS-Netzwerks abonniert hat, assoziiert ist, und wenn dies der Fall ist, die besagte Anforderung an die besagte Zugangskontrollvorrichtung (D), an welche sie gekoppelt sind, zu übertragen, damit diese die besagte Anforderung in Zusammenarbeit mit dem besagten IMS-Netzwerk, welches die von ihm abonnierten Dienste anbietet, verarbeitet.

12. Vermittlungsstelle nach Anspruch 11, **dadurch gekennzeichnet, dass** die besagten Verarbeitungsmittel (MT) dazu ausgelegt sind, auf das besagte VLR-Modul zuzugreifen, um zu ermitteln, ob ein anrufender Teilnehmer, dessen Endgerät (UE) an die besagte CS-Domain angeschlossen ist, IMS-Dienste abonniert hat.

13. Vermitlungsstelle nach einem der Ansprüche 7 bis 12, **dadurch gekennzeichnet, dass** bei Anwesenheit eines Teilnehmers, dessen Endgerät (UE) an die CS-Domain des Mobilfunknetzwerks, welchem er angehört, angeschlossen ist, jede IMS-Markierung vom Typ OSSS ist.

14. Vermittlungsstelle nach einem der Ansprüche 7 bis 13, **dadurch gekennzeichnet, dass** bei Anwesenheit eines Teilnehmers, dessen Endgerät (UE) zwar an die besagte CS-Domain angeschlossen ist, jedoch einem anderen Mobilfunknetzwerk angehört, jede IMS-Markierung vom Typ IN/CSI.

15. Vermittlungsstelle vom Typ MobilFunk-Vermittlungsstelle, MSC, (VMSC), dafür bestimmt, die Verbindungen vom Typ leitungsvermittelte Verbindungen, CS, in einem Mobilfunkkommunikationsnetzwerk, welches eine Domain vom Typ CS umfasst und an ein Kommunikationsnetzwerk vom Typ IP Multimedia Subsystem, IMS, angeschlossen werden kann, welches mindestens ein Modul vom Typ Proxy Call Session Control Function, P-CSCF, und mindestens ein an mindestens einen Anwendungsserver (AS1), der Dienste vom Typ IMS anbietet, gekoppeltes Modul vom Typ Serving Call Session Control Function, S-CSCF, umfasst, zu verwalten, und wobei das Mobilfunknetzwerk ebenfalls eine Zugangskontrollvorrichtung (D) gemäß einem der Ansprüche 1 bis 6 umfasst, wobei die Vermittlungsstelle vom Typ MSC Verarbeitungsmittel (MT) umfasst, welche an die besagte Zugangskontrollvorrichtung (D) gekoppelt werden können und dazu ausgelegt sind, im Fall des Empfangs von Informationen, die den Anschluss eines Endgeräts (UE) an die besagte CS-Domain ihres Mobilfunktnetzwerks signalisieren, auf ein Subskriptionsinformations-Modul (HSS) ihres Mobilfunknetzwerks zuzugreifen, um diesem die besagten Informationen zum Zweck seiner Aktualisierung zu übertragen und Auskünfte über den Teilnehmer, welcher das besagte Endgerät (UE) benutzt, abzufragen, insbesondere eine eventuelle IMS-Markierung, welche bestätigt, dass er IMS-Dienste eines Kommunikationsnetzwerks vom Typ IMS abonniert hat, und in einem Modul vom Typ Besucheraufenthaltsregister, VLR, seines Mobilfunknetzwerks die mit dem besagten Teilnehmer assoziierte Ins-markierung sowie zusätzliche Informationen, die für die Adresse der Zugangskontrollvorrichtung (D) des IMS-Netzwerks, welchem er angehört, repräsentativ sind und von dem besagten Subskriptionsinformations-Modul (HSS) übertragen wurden, entsprechend den für den besagten Teilnehmer repräsentativen Informationen zu speichern

16. Vermittlungsstelle nach Anspruch 15, **dadurch gekennzeichnet, dass**, im Fall des Empfangs einer Anforderung für den Aufbau einer Verbindung von einem an die besagte CS-Domain angeschlossenen Endgerät (UE), die besagten Verarbeitungsmittel (MT) dazu ausgelegt sind, zu ermitteln, ob der Benutzer des besagten Endgeräts (UE) mit einer IMS-Markierung, welche bestätigt, dass er die IMS-Dienste abonniert hat, assoziiert ist, und, wenn dies der Fall ist, bei einem Dienst-Kontrollpunkt vom Typ SCP Informationen anzufordern, welche das Routen der angeforderten Verbindung ermöglichen, und die besagte Anforderung für den Aufbau der Verbindung gemäß den besagten Routing-Informationen an eine Zugangskontrollvorrichtung (D) des Mobilfunknetzwerks, bei welchem der Benutzer des besagten anfordernden Endgeräts (UE) abonniert ist, zu routen.

17. Vermittlungsstelle nach Anspruch 16, **dadurch gekennzeichnet, dass** die besagten Verarbeitungsmittel (MT) dazu ausgelegt sind, auf das besagte VLR-Modul zuzugreifen, um zu ermitteln, ob ein anrufendes Endgerät (UE), welches an die besagte CS-Domain angeschlossen ist, einem Teilnehmer, der IMS-Dienste über ein CS-Endgerät abonniert hat, entspricht.

18. Vermittlungsstelle nach einem der Ansprüche 15 bis 17, **dadurch gekennzeichnet, dass** bei Anwesenheit eines Endgeräts (UE), welches an die CS-Domain des Mobilfunknetzwerks, welchem es angehört, angeschlossen ist, jede IMS-Markierung vom Typ OSSS ist.

19. Vermittlungsstelle nach einem der Ansprüche 15 à 17, **dadurch gekennzeichnet, dass** bei Anwesenheit eines Endgeräts (UE), welches an die besagte CS-Domain angeschlossen ist, aber einem anderen Mobilfunknetzwerk angehört, jede IMS-Markierung vom Typ IN/CSI ist.
